# FASCICULE DE BREVET EUROPEEN

(11) **EP 2 845 651 B1**
(45) Date de publication et mention de la délivrance du brevet: **16.05.2018**
(21) Numéro de dépôt: 14183600.7
(22) Date de dépôt: 04.09.2014
(51) Int. Cl.: B05B 13/02, B05B 15/12, B05B 15/04, F26B 15/12, F26B 15/18, C03C 17/00, B05D 5/08, B05D 1/00, B65G 15/14

(54) **Machine pour traiter la surface latérale d'articles, notamment en verre**
Maschine zur seitlichen Oberflächenbearbeitung von Artikeln, insbesondere aus Glas
Machine for treating the side surface of items, especially glass items

(30) Priorité: 04.09.2013 FR 1358469
(43) Date de publication de la demande: 11.03.2015
(73) Titulaire: Tecadis Systems, 77370 Nangis (FR)
(72) Inventeur: Richet, Cyril, 77210 Samoreau (FR)
(74) Mandataire: Pontet Allano & Associes

(56) Documents cités:
- EP-A2- 0 089 803
- WO-A1-94/17925
- DE-A1- 2 517 504
- DE-A1-102006 049 134
- FR-A1- 2 248 882
- FR-A1- 2 443 882
- FR-A1- 2 656 238
- KR-B1- 101 282 287
- US-A- 2 210 187
- US-A- 3 296 999
- US-A1- 2006 065 192

## Description

La présente invention concerne une machine pour traiter la surface latérale d'articles, notamment en verre, comme des bouteilles ou des flacons.

La présente invention concerne en particulier mais non limitativement le traitement des bouteilles en verre pour réduire leur adhérence mutuelle dans des étapes ultérieures de manipulation de ces bouteilles dans diverses machines automatiques.

Le traitement des bouteilles ou flacons depuis le stade du récipient vide jusqu'au stade du récipient rempli, bouché, étiqueté, nécessite des opérations portant sur la surface latérale périphérique du récipient.

Les installations comportant des machines automatiques manipulant des bouteilles ou des flacons en verre, par exemple, les machines de contrôle de la conformité des bouteilles, des machines d'embouteillage de boissons ou autres substances dans des bouteilles en verre, comportent généralement des convoyeurs de manutention véhiculant les bouteilles le long de l'installation en passant par les différentes machines.

Sur ces convoyeurs ou dans les machines elles-mêmes, les récipients doivent à différents moments glisser les uns contre les autres avec des cadences généralement très élevées, pour par exemple se mettre en ligne après une zone de stockage, ou se mettre en position en dessous du distributeur du produit de remplissage.

Or, le verre n'a pas un coefficient de glissement très élevé. Les articles peuvent avoir du mal à glisser les uns sur les autres. Il y a alors un risque de bourrage des moyens de manutention, de basculement et de bris d'une ou plusieurs bouteilles et d'arrêt de la chaîne automatique de production. Il y a également un risque que les articles se rayent mutuellement en frottant les uns contre les autres.

Afin de faciliter le glissement au contact entre articles, il est connu, en tant que l'une des opérations précitées portant sur la surface latérale périphérique des bouteilles, de préparer leurs surfaces extérieures au moyen de buses de pulvérisation disposées au-dessus des bouteilles ou flacons disposés dans une chambre, afin de pulvériser un produit de traitement réduisant l'adhérence entre bouteilles ou flacons.

Un problème qui se pose avec ce procédé de pulvérisation est que la surface supérieure du contenant tournée vers le haut, notamment les épaules d'une bouteille, reçoit beaucoup de produit, alors que c'est le corps inférieur, de plus grande section qui est au contact des autres bouteilles. On a un gaspillage du produit de traitement sur la partie supérieure, et un risque de manque de produit sur la hauteur de la bouteille ou du flacon en contact avec les autres, en particulier dans le cas où le corps de ce récipient est cylindrique sur une grande hauteur.

Un autre problème qui se pose est que si le récipient n'est pas fermé pour cette opération, du produit de traitement peut entrer dans la bouteille ou le flacon, ce qui peut polluer le contenu ultérieur du récipient et constitue une perte supplémentaire de tout ou partie de produit de traitement.

Un autre problème est que le traitement ainsi appliqué n'est pas homogène sur le pourtour de la bouteille.

Encore un autre problème est que le procédé connu est un traitement par lots de bouteilles qui est difficile à intégrer dans une chaîne de traitement fonctionnant en continu.

Il y a également le problème que le procédé connu de traitement dans une chambre n'est pas utilisable pour, par exemple, déposer un liseré de couleur sur le pourtour du récipient, ou plus généralement effectuer une opération localisée sur la surface périphérique du récipient.

Le FR 2 656 238 A1, qui décrit un procédé selon le préambule de la revendication 23, enseigne une machine de traitement de surface dans laquelle les articles à traiter défilent devant une rampe d'arrosage tout en tournant sur eux-mêmes. Pour cela ils sont pris entre une courroie fixe et une courroie mobile.

Selon le WO94/17925 A1, les articles sont pris entre deux courroies entraînées à des vitesses différentes.

Le US 3 296 999 enseigne de faire tourner sur eux-mêmes des articles entrainés par une chaîne convoyeuse pour défiler devant des moyens de pulvérisation. Un flux d'air généré en sens contraire de la pulvérisation vise à empêcher la pulvérisation d'atteindre une zone à protéger sur les articles, en particulier l'intérieur des articles.

Selon le EP 0 089 803 A2, qui décrit une machine selon le préambule de la revendication 1, les articles à enduire sont attachés à des suspentes entraînées en translation et en rotation pour faire tourner les articles sur eux-mêmes tout en les faisant défiler devant des moyens de pulvérisation. Un flux d'air venant d'un même côté que la pulvérisation est dirigé vers les suspentes pour empêcher le produit pulvérisé d'atteindre les moyens d'entraînement.

Selon le KR 101 282 287 B1, un article à peindre est attaché à un convoyeur sans fin pour passer par plusieurs postes de pulvérisation où il tourne sur lui-même. A chaque poste, une zone respective de l'article est exposée à la pulvérisation, cette zone étant délimitée par des jets d'air dont certains viennent du même côté que la pulvérisation.

La présente invention a notamment pour but de remédier au moins en partie aux inconvénients de la technique antérieure, notamment en ce qui concerne le soufflage protégeant certaines zones des articles.

Elle propose à cet effet une machine de traitement d'une surface latérale périphérique d'articles selon la revendication 1. Avantageusement :
- les articles tournent sur eux-mêmes autour d'un axe vertical,
- les moyens d'entraînement portent les articles, de préférence en suspension par une région d'entraînement située au-dessus de la surface latérale à traiter.

Mais on peut aussi porter les articles par le bas et traiter une surface latérale périphérique située au-dessus des moyens d'entraînement.

Avec la machine selon l'invention, le traitement est appliqué de façon régulière et ciblée sur la surface nécessitant le traitement.

En outre, le traitement s'opère alors que les articles progressent le long du trajet de traitement, ce qui facilite l'intégration de la machine dans une chaîne industrielle fonctionnant en continu.

Typiquement, les moyens de traitement sont des buses de pulvérisation, de préférence disposées en quinconce dans un plan latéral par rapport au trajet de traitement. En particulier, lorsque les articles sont en verre, les moyens de traitement peuvent être des buses de pulvérisation d'une substance réductrice du coefficient de frottement entre articles en verre, en particulier des bouteilles.

Ce mode de réalisation combine de manière très simple les moyens pour faire avancer et en même temps tourner sur eux-mêmes les articles à traiter.

Typiquement, lorsque les articles sont des récipients tels que bouteilles ou flacons, la région de préhension est un col des récipients et la surface latérale périphérique s'étend autour du corps du récipient.

Il est alors avantageux que les moyens d'entraînement portent les récipients en suspension par leur col, les récipients s'étendant suivant un axe vertical avec la surface latérale à traiter située en-dessous du col.

Les récipients peuvent être sécurisés contre les défauts de positionnement et la chute si leur collerette de goulot repose sur le bord supérieur des courroies.

Mais on peut aussi entraîner les récipients par leur surface latérale inférieure et faire agir les moyens de traitement au-dessus des moyens d'entraînement.

Par ailleurs, des moyens d'appui peuvent être prévus pour la face intérieure des courroies qui enserrent les articles, les moyens d'appui sont conçus pour empêcher les courroies de s'écarter l'une de l'autre dans la région où elles doivent enserrer les articles entre elles.

Les moyens d'appui peuvent, en supplément ou en variante, être conçus pour empêcher les courroies de fléchir vers le bas sous l'effet du poids des articles.

De préférence, l'écartement latéral entre les deux convoyeurs est réglable. On peut ainsi adapter la machine à des articles dont les régions d'entraînement ont des diamètres différents.

L'écartement latéral peut par exemple être réglé en faisant tourner des vis de positionnement latéral de deux chariots liés chacun à l'un des convoyeurs. Chaque vis comprend de chaque côté un pas inversé par rapport à l'autre, chacun des côtés étant engagé dans un écrou fixé à des chariots.

Avantageusement, les convoyeurs comportent de chaque côté du trajet de traitement deux courroies disposées l'une au-dessus de l'autre, et dont l'une est démontable pour les produits dont la région de préhension présente une faible hauteur.

Il y a de préférence des moyens de calage en hauteur des courroies relativement à leurs poulies de guidage, pour éviter que les courroies soient déportées vers le bas par le poids des articles.

Il peut être prévu des courroies comprenant dans la largeur une partie présentant une épaisseur réduite pour ne pas être en contact avec les articles. De telles courroies permettent de traiter des articles présentant une région de préhension de faible dimension axiale entre deux régions de plus fort diamètre telles qu'une collerette de goulot et un corps.

Les convoyeurs comportent de préférence un système de tension rapide des courroies, comprenant de préférence une genouillère manoeuvrée par une poignée de commande. On peut ainsi aisément remplacer une courroie usagée par une neuve, ou une courroie par une autre de type différent en fonction du type d'article à traiter.

Avantageusement, la position en hauteur des moyens d'entraînement est réglable, de préférence par rotation synchronisée de vis verticales engagées dans des écrous, assurant le déplacement vertical des moyens d'entraînement.

La machine comporte avantageusement, sur le dessus, un cadre coulissant verticalement qui supporte les moyens d'entraînement, ce cadre étant maintenu par des colonnes verticales guidées chacune par une douille de guidage.

Le moyen générant un film d'air peut être alimenté en air par des conduits constitués par des mâts creux qui relient les moyens d'entraînement au cadre coulissant verticalement.

Dans un mode de réalisation, la machine comporte un moyen de réglage de la distance des moyens de traitement par rapport à l'axe du trajet du traitement.
On peut ainsi adapter la machine à des diamètres de surface à traiter différents et/ou régler la distance entre les moyens de traitement et la surface à traiter.

Au moins une dimension de travail des moyens de traitement, choisie parmi la hauteur de traitement, la longueur mesurée parallèlement à la direction du trajet de traitement, la position d'un bord inférieur et/ou d'un bord supérieur de la région de traitement, peut être réglable.

Le traitement des articles est, de préférence, fait dans une chambre de traitement sensiblement fermée, qui est soumise à une dépression.

La machine de traitement comporte du côté opposé aux moyens de traitement, par exemple sur une porte, une goulotte d'aspiration débouchant sur une cheminée. Il y a, de préférence devant la goulotte d'aspiration des déflecteurs mobiles ayant une inclinaison réglable.

Avantageusement, le fond de la chambre de traitement présente au moins une inclinaison qui permet de récupérer un produit de traitement dans au moins une goulotte.

En sortie de trajet de traitement, il y a de préférence un caisson de séchage comprenant des diffuseurs d'air chaud disposés de chaque côté du trajet des articles.

En sortie de la zone de traitement, en particulier dans le caisson de séchage précité, les produits sont avantageusement relâchés par les moyens d'entraînement sur un convoyeur inférieur sur lequel les produits viennent reposer.

Suivant un autre objet, l'invention propose un procédé pour traiter la surface latérale périphérique de récipients à col selon la revendication 23. L'invention sera mieux comprise et d'autres caractéristiques et avantages apparaîtront plus clairement à la lecture de la description ci-après donnée à titre d'exemple, en référence aux dessins annexés où :
- la figure 1 est une vue en élévation d'une machine de traitement de surface selon l'invention ;
- la figure 2 est une vue en perspective de la mécanisation de cette machine ;
- les figures 3 et 4 sont des vues présentant deux exemples de prise d'une bouteille par les deux convoyeurs, respectivement par le col et par le corps ;
- la figure 5 est une vue de détail de la prise de la bouteille par son col ;
- les figures 6 et 7 sont des vues de détail de la prise de différents formats de bouteilles par leur col, avec des convoyeurs spécifiquement configurés ;
- la figure 8 est une vue d'un système de centrage des articles en sortie des convoyeurs ;
- les figures 9 et 10 sont des vues d'une soufflerie installée dans un convoyeur ;
- la figure 11 est une vue partielle en coupe longitudinale d'un support de convoyeur, comprenant un système de tension rapide ;
- la figure 12 est une vue en perspective fantôme de la chambre de traitement intégrée dans la machine ;
- la figure 13 est une vue de détail de l'ensemble des buses de pulvérisation ; et
- la figure 14 est une vue fantôme du caisson de séchage installé en sortie.

L'invention va maintenant être décrite au moyen d'un exemple de réalisation perfectionné. Il est expressément spécifié que toute particularité qui sera décrite a son sens dans une combinaison complexe, mais aussi dans toute combinaison plus générale où elle peut jouer un rôle, et que ce soit dans la version spécifiquement décrite de cette particularité ou dans une version généralisée à la fonction de cette particularité.

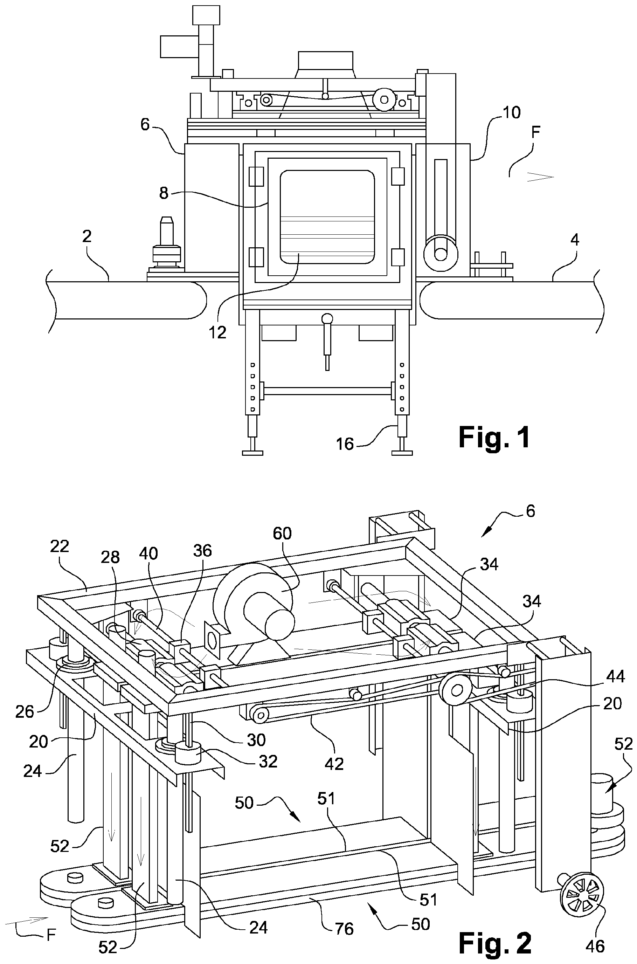

La figure 1 présente une machine pour le traitement de surface d'articles en verre, traversée par un flux longitudinal F d'articles comme des flacons ou des bouteilles suivant une ligne droite, ces articles arrivant par un convoyeur inférieur d'entrée 2 se trouvant sur le côté gauche de la figure, et sortant par un convoyeur inférieur de sortie 4 se trouvant sur le côté droit. La machine repose sur des pieds 16 équipés de moyens de réglage en hauteur.

Par convention le flux des articles F arrive d'un côté appelé côté arrière, et se déplace vers le côté avant de la machine, en passant par un trajet de traitement dans la machine.

La machine de traitement comporte une partie mécanisation 6 chargée des différents déplacements des articles, qui entoure une chambre centrale de traitement des articles 8, et comporte en aval de la sortie de la chambre 8 un caisson 10 de séchage des articles traités.

La face de la machine présentée sur cette vue est la face de travail comprenant un hublot de la chambre de traitement 8, permettant à un opérateur de surveiller le traitement des articles opéré par une série de buses de pulvérisation 12 (qu'on a représentées symboliquement par trois rangées horizontales) qui se trouvent juste derrière ce hublot. La face opposée de la machine est une face de réglage équipée d'armoires comprenant les différentes commandes permettant la mise au point de cette machine pour traiter des bouteilles ou flacons en fonction de leur format, des doses à appliquer, etc.

Dans une machine appliquant un traitement à des articles pendant que ceux-ci défilent dans le flux F, l'invention prévoit de faire tourner les articles sur eux-mêmes en même temps que ceux-ci progressent selon la flèche F.

Dans le mode de réalisation préféré qui est décrit, les articles sont saisis entre les courroies 76 de deux convoyeurs à courroies 50 (Figure 2) disposés dans un plan commun horizontal. Les convoyeurs sont disposés de façon à avoir parallèlement au flux F deux parties menantes 51 qui se font face et qui ont des vitesses différentes avec une vitesse moyenne (demi-somme algébrique des deux vitesses) égale à la vitesse voulue pour le flux d'articles. Ces deux parties menantes sont destinées à être en prise par adhérence avec une région de préhension cylindrique des articles, de façon à entraîner les articles selon la vitesse moyenne précitée tout en les faisant tourner sur eux-mêmes à une vitesse qui est fonction du rayon de la région de préhension et de la différence de vitesse entre les deux parties menantes 51.

De préférence, les articles sont en même temps portés par les deux parties menantes 51 et, en conséquence, traversent la machine en étant suspendus aux deux convoyeurs 50.

La machine est de préférences prévue pour traiter des articles de différentes dimensions, et/ou des articles dont la région de préhension la mieux appropriée peut avoir un diamètre et/ou une position en hauteur différents.

Pour cela, les convoyeurs sont réglables en hauteur. Dans l'exemple représenté, les convoyeurs sont suspendus par des mâts 52 à un cadre 22 réglable en hauteur.

Dans l'exemple de la figure 2, la mécanisation 6 comportent deux traverses 20 fixées en hauteur sur le châssis de la machine, qui supportent le cadre 22 coulissant verticalement au-dessus de ces traverses. Le cadre 22 comporte à chaque angle une colonne verticale 24 guidée par une douille à billes 26 fixée à une extrémité de l'une des traverses.

Chaque angle du cadre 22 comporte une vis verticale 30 commandée par des motorisations, qui est engagée dans un écrou à billes 32 fixé à une extrémité de chaque traverse 20. On obtient ainsi par une commande identique de la rotation des vis verticales 30, un réglage en hauteur du cadre 22 qui reste parfaitement horizontal.

L'écartement des convoyeurs 50 est réglable pour correspondre au diamètre de la région de préhension des articles. De préférence le réglage d'écartement se fait de façon que les deux parties 51 soient toujours disposées symétriquement par rapport à l'axe du flux F. Pour le réglage d'écartement, chaque convoyeur 50 est porté par deux chariots 28 déplaçables horizontalement et perpendiculairement à la direction du flux F, de façon synchronisée.

Les quatre chariots 28 sont synchronisés de façon que les deux parties menantes 51 restent parallèles entre elles et symétriques par rapport à l'axe du flux F.

Dans l'exemple, les mâts 22 précédemment décrits sont fixés aux chariots 28 qui sont montés coulissants sur le cadre 22.

Plus, particulièrement, chaque chariot 34 comporte à son extrémité avant et arrière, une douille 28 engagée sur un axe de guidage transversal fixé par ses extrémités en dessous du cadre 22, afin d'assurer un support et un guidage latéral de chaque chariot.

A l'avant et à l'arrière du cadre 22, une vis de réglage latéral 40 comprenant de chaque côté un pas inversé par rapport à l'autre, est engagée par chacun de ses côtés dans un écrou respectif fixé sur un des chariots 34. Les deux vis de réglage latéral 40 sont reliées entre elles par une courroie dentée 42 de synchronisation, qui est reliée par une courroie dentée primaire 44 à un volant de réglage de l'écartement 46 situé sur le côté avant de la face de travail de la machine.

Par une rotation du volant 46 l'opérateur entraîne de manière synchronisée chaque vis de réglage latéral 40, qui par leurs deux pas inversés règlent de manière symétrique l'écartement des chariots entre eux.

Le système de poulies arrière de chaque convoyeur est entraîné par une motorisation 52, comprenant un moteur électrique et un réducteur de vitesse.

Avantageusement on utilise un moteur électrique du type « brushless », permettant de contrôler de manière précise sa vitesse de rotation. Les convoyeurs 50 traversent la chambre de traitement 8 suivant le sens du flux F. Les motorisations 52 sont à l'extérieur du côté de l'entrée de cette chambre.

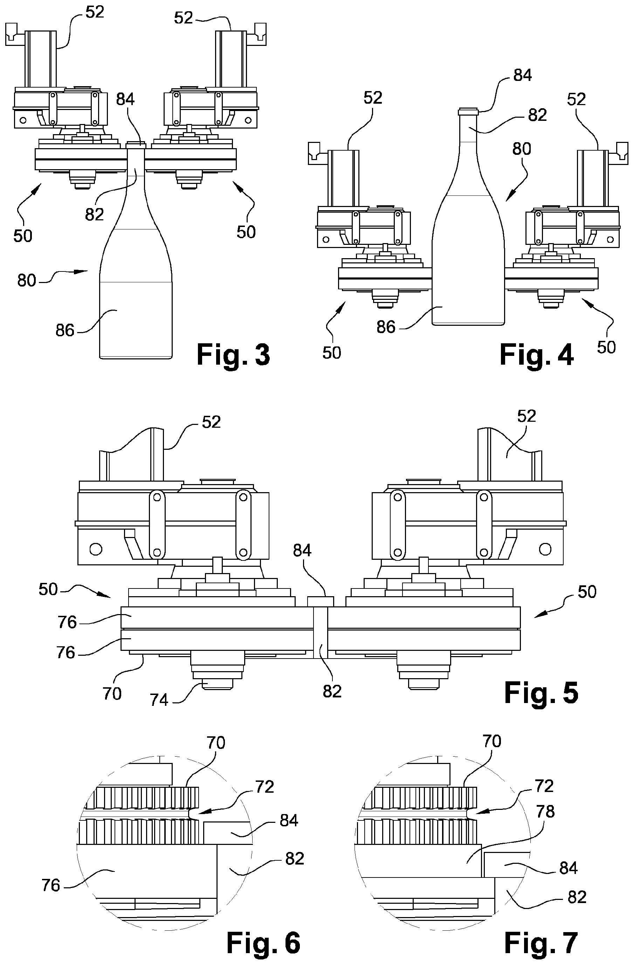

Les figures 3 à 7 présentent les deux convoyeurs 50 vus du côté avant, entraînés chacun par leur motorisation 52. Chaque système de poulies se trouvant à l'avant ou à l'arrière des convoyeurs 50, comporte deux poulies identiques 70 superposées et solidaires l'une de l'autre, recevant chacune une courroie 76 tendue entre les deux systèmes de poulies.

Chaque courroie 76 comporte des dents internes qui s'ajustent dans des dentures extérieures de ses poulies 70, afin de réaliser un entraînement et une synchronisation de la vitesse. La face intérieure des courroies 76 reçoit au centre par collage une nervure longitudinale continue, qui s'ajuste dans une gorge circulaire médiane 72 de ses poulies 70 afin de réaliser un positionnement en hauteur des courroies.

La face extérieure des courroies 76 qui est lisse est en contact d'adhérence avec une partie circulaire cylindrique de l'article en verre, qui est dans l'exemple présenté figure 3 le goulot 82 d'une bouteille 80, comprenant un rebord supérieur ou collerette de goulot 84. En variante présentée figure 4, la face extérieure des courroies 76 est en contact d'adhérence avec le corps cylindrique 86 de la bouteille 80, avec un positionnement plus bas et un plus grand écartement des convoyeurs 50.

Une course de réglage de position en hauteur des convoyeurs 50 de l'ordre de par exemple 480 mm, est suffisante pour permettre un passage de la plupart des articles à traiter, qu'il s'agisse de grands articles dont la région de préhension est en position haute ou basse sur l'article, ou de petits articles (petits flacons de parfumerie ou pharmacie par exemple).

Avantageusement, les faces extérieures des courroies 76 comportent un élastomère comme un caoutchouc, choisi pour sa bonne adhérence sur les articles en verre.

De préférence, lorsque la région de préhension est le col de la bouteille, les convoyeurs sont réglés en hauteur de façon que la collerette du goulot 84 s'appuie sur le bord supérieur de la courroie 76 ou 78. Ceci apporte une sécurité pour le bon positionnement des bouteilles et contre la chute des bouteilles.

Avantageusement on choisit la différence de vitesse des deux motorisations 52 afin d'assurer plusieurs révolutions des articles en verre au cours de la translation le long de la chambre 8, afin d'assurer une bonne répartition du produit de traitement sur tout le pourtour de ces articles.

La figure 5 détaille le serrage du col 82 de la bouteille 80 par deux convoyeurs 50 comprenant chacun deux courroies identiques 76 superposées, de façon à simuler une courroie unique de grande largeur, ce qui oblige à disposer d'une région de préhension (col 82) dont la hauteur est au moins égale à ladite largeur. En particulier chaque courroie peut avoir une largeur de 25 mm, la partie cylindrique de l'article devant avoir une hauteur d'au moins 50 mm.

La figure 6 détaille la préhension du col 82 d'une bouteille dont la hauteur est au moins égale à la largeur d'une seule courroie, mais peut être inférieure à celle des deux courroies superposées, donc une hauteur supérieure à 25 mm mais pouvant être inférieure à 50 mm dans l'exemple. Pour cela, on a retiré les deux courroies supérieures, l'entraînement des bouteilles se faisant uniquement avec les courroies inférieures 76, ce qui permet de disposer le rebord supérieur 84 du col 82 dans les espaces laissés libre par l'absence des courroies supprimées.

La figure 7 détaille le serrage d'un col 82 dont la hauteur est inférieure à la largeur d'une courroie, par exemple comprise entre 10 et 25 mm. On utilise alors une seule courroie inférieure 78 qui est spéciale, ayant une partie basse avec une largeur, par exemple, de 10 mm et une épaisseur normale, et une partie haute évidée sur l'extérieur, dont l'épaisseur a ainsi été fortement réduite. Le rebord supérieur 84 du col 82 peut alors être disposé dans les espaces laissés libres par l'épaisseur réduite de la partie haute évidée.

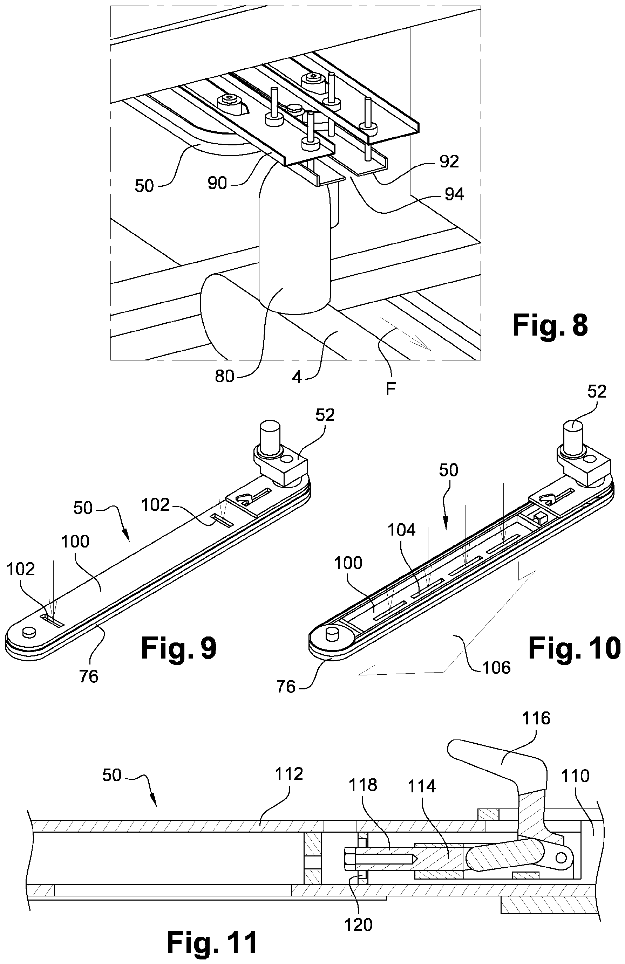

La figure 8 présente un système de centrage des bouteilles 80 en sortie des convoyeurs 50, comprenant de chaque côté un rail de guidage 92 fixé sous un convoyeur 50 respectif, en étant suspendu à une platine supérieure respective 90 fixée au-dessus du convoyeur. Les rails de guidage 92 définissent entre eux une fente de guidage 94 pour le goulot des bouteilles. Le long de leur bord adjacent à la fente de guidage 94, les rails 92 sont recouverts d'un matériau favorisant le glissement du goulot des bouteilles.

De cette manière les goulots des bouteilles 80 sortant des convoyeurs 50, sont systématiquement alignés suivant l'axe du flux F pour s'ajuster sur le convoyeur de sortie 4, afin d'entrer dans le caisson de séchage.

Les figures 9 et 10 présentent le convoyeur 50 se trouvant du côté des buses de pulvérisation. Il comporte un boîtier intérieur 100 de distribution d'un film d'air 106. Le boîtier 100 remplit l'espace intérieur des courroies 76 entre les deux systèmes de poulies. Le boîtier intérieur 100 comporte à chaque extrémité une ouverture supérieure 102 recevant l'air d'un pulseur d'air 60 (Figure 2) monté sur le cadre 22. Dans l'exemple l'air passe du pulseur d'air 60 au boîtier 100 par les mâts 52 qui, à cet effet, sont creux.

Le boîtier intérieur 100 qui est présenté ouvert à la figure 10, comporte sur sa face inférieure une succession de fentes longitudinales 104 distribuant un film d'air régulier 106 dirigé dans un plan sensiblement horizontal vers le haut des articles en verre en cours de traitement dans la chambre 8, afin de faire barrage au produit de traitement et empêcher celui-ci d'atteindre les courroies. Avantageusement, la largeur des fentes 104 est de l'ordre de 2 mm.

Ainsi avec un unique film d'air 106 se trouvant du côté des buses de pulvérisation, on abrite les convoyeurs 50 afin d'éviter de les recouvrir de produit de traitement et de réduire leur adhérence, ainsi que les parties supérieures des articles en verre qui n'ont pas besoin de recevoir de traitement, ce qui permet de réduire la consommation du produit.

Il s'est avéré plus efficace d'utiliser un film d'air d'un seul côté plutôt que deux films opposés qui pourraient se perturber mutuellement et générer des turbulences.

Des moyens sont prévus pour supporter la partie menante 51 des courroies 76 qui enserre les articles à traiter, entre les poulies d'extrémité, pour empêcher les courroies de s'écarter l'une de l'autre et de permettre la chute des articles. Dans l'exemple représenté, ces moyens sont constitués par les faces extérieures des boîtiers 100 précités, qui empêchent les courroies de fléchir horizontalement et qui peuvent être conformées en rail pour les bords des courroies ou pour leur nervure centrale passant dans les gorges 72 des poulies, de façon à également empêcher la flexion des courroies vers le bas.

La figure 11 présente en coupe longitudinale un système de tension rapide des courroies d'un convoyeur 50, comprenant une genouillère 114 fixée sur une partie fixe 110 recevant la motorisation du convoyeur. Une partie longitudinale mobile 112, portant l'autre système de poulies du convoyeur, peut coulisser parallèlement à la direction du flux F par rapport à la partie fixe 110, sous l'action de la genouillère 114 manoeuvrée par sa poignée de commande 116 mobile dans un plan vertical.

La genouillère 114 comporte une tige filetée axiale 118 en prise avec un écrou 120 fixé sur la partie mobile 112, qui permet d'ajuster la tension une fois la poignée 116 complètement abaissée.

On peut ainsi rapidement détendre les courroies en manoeuvrant la poignée 116 qui déplace la partie mobile 112 vers la partie fixe 110, ce qui permet de déposer ces courroies pour les changer, et de les retendre rapidement en retrouvant le réglage de tension précédent.

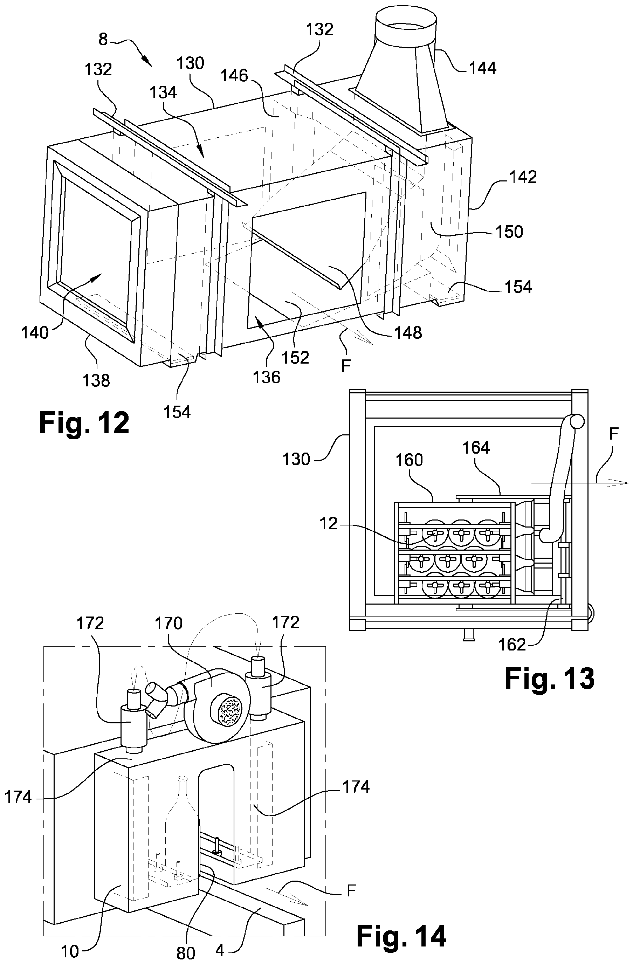

Les figures 12 et 13 présentent la chambre de traitement 8, formant un caisson parallélépipédique en tôle 130 qui est fixé à la machine par des traverses supérieures 132. Chaque traverse supérieure 132 est fixée à la machine par deux vis se trouvant à ses extrémités, ce qui permet de déposer facilement et rapidement l'ensemble de la chambre de traitement 8, pour la nettoyer, notamment avec un nettoyeur à eau pressurisée.

La face arrière du caisson de traitement 130 comporte une ouverture arrière centrale 134 prévue pour l'entrée des articles, la face avant comportant une ouverture avant centrale similaire 136, prévue pour leur sortie.

Avantageusement les ouvertures centrales arrière 134 et avant 136 comportent des moyens permettant d'ajuster la section de passage juste nécessaire en fonction de la silhouette la plus grande des articles à passer, de manière à limiter les échanges avec l'air extérieur. On peut prévoir en particulier des volets qui peuvent glisser sur les côtés et sur le dessus. Chaque volet peut comporter notamment une série de petites tôles qui peuvent se superposer pour agrandir le passage, ou se déployer pour le refermer.

La face de travail comporte une première porte étanche 138 comprenant un hublot vitré 140 disposé devant les buses de pulvérisation 12, qui permet à l'opérateur de surveiller le déroulement des opérations à l'intérieur de la chambre de traitement 8.

Les buses de pulvérisation 12 sont fixées sur un cadre 160 maintenu verticalement derrière le hublot 140, et disposées suivant trois rangées comprenant chacune trois buses.

Le cadre 160 est relié au caisson 130 par deux leviers horizontaux 164 qui peuvent pivoter suivant un axe vertical, afin de rapprocher ou d'éloigner les buses 12 des articles à traiter. Ces leviers horizontaux 164 sont fixés sur une barre verticale 162, qui permet un réglage en hauteur du cadre 160 afin d'aligner l'ensemble des buses 12 sur les surfaces à traiter.

Avantageusement les buses 12 sont disposées en quinconce, de manière à couvrir au mieux les surfaces latérales des articles en verre qui défilent devant elles.

On peut en particulier utiliser seulement une ou deux rangées de buses 12, suivant la hauteur de la surface latérale des articles à traiter. On peut aussi sur chaque rangée activer seulement une ou deux buses 12 s'il faut déposer une quantité de produit de traitement réduite, par exemple si le corps de l'article à traiter est de petit diamètre.

La face de réglage de la machine opposée à la face de travail, dispose d'une deuxième porte étanche 142 supportant à l'intérieur une goulotte d'aspiration 150 débouchant dans une cheminée supérieure circulaire 144 de grande section, ayant un diamètre, par exemple, de 300 mm. La cheminée 144 est reliée à un système d'aspiration extérieur, afin de maintenir une dépression dans le caisson de traitement 130 qui est sensiblement étanche.

La goulotte d'aspiration 150 comporte une ouverture intérieure rectangulaire recevant sur les côtés des tôles formant des déflecteurs d'air latéraux fixes 146, et sur le dessus un déflecteur supérieur 148 à inclinaison réglable, afin d'aspirer le brouillard de vaporisation du produit de traitement. Le déflecteur supérieur 148 est réglé de manière à ajuster son entrée un peu au-dessus des buses pulvérisant le produit de traitement, pour capter au mieux le produit qui passe derrière la ligne d'articles.

Le système d'aspiration intérieure est facilement nettoyable en ouvrant la porte arrière 142 qui ouvre en même temps la goulotte d'aspiration 150, et donne accès à l'intérieur du caisson 130 qui peut être nettoyé avantageusement avec un nettoyeur à eau pressurisée.

Le fond du caisson comporte une tôle légèrement inclinée 152 permettant de récupérer le produit de traitement qui ruisselle, et de l'envoyer vers une des deux goulottes internes 154 se trouvant au pied de chaque porte 138, 142. Chaque goulotte 154 comporte une grille filtrante permettant de récupérer des morceaux comme des débris de verre, et un piquage relié par une vanne à une canalisation permettant une évacuation du produit vers l'extérieur.

La figure 14 présente le caisson de séchage 10 recevant directement les articles 80 ayant reçu le produit de traitement, qui sortent de la chambre de traitement 8 par l'ouverture avant 136.

Le caisson de séchage 10 comporte sur le dessus un pulseur d'air 170 transmettant cet air sous une légère pression à deux réchauffeurs 172, qui envoient chacun cet air chaud dans un tube vertical formant un diffuseur 174 placé d'un côté ou de l'autre du flux F des articles 80. Chaque diffuseur 174 comporte une série de perçages régulièrement disposés sur sa hauteur en face des articles 80, afin d'envoyer un flux d'air régulier à une température élevée qui peut atteindre 650°C.

Le poste de travail comporte des armoires de commande gérant les commandes électriques et fluides de la machine de traitement, qui sont placées du côté de commande, et espacées de cette machine pour permettre le passage d'un opérateur entre les armoires et la machine, ainsi que l'accès à la deuxième porte étanche 142 qui se trouve de ce côté. Une goulotte passant au-dessus de l'opérateur, relie les armoires à la machine.

La machine de traitement comporte ainsi tous les réglages manuels ou motorisés, permettant rapidement une mise en configuration en fonction de la forme des articles à traiter. Une fois ces réglages effectués la vitesse de passage des articles peut être élevée, avec un haut niveau de qualité sur la régularité de traitement des surfaces, ainsi qu'une consommation minimum du produit de traitement.

Différents capteurs sont placés dans la machine pour permettre son fonctionnement en automatique, et assurer la sécurité. On peut prévoir notamment une détection des articles à l'entrée permettant de commander le démarrage et l'arrêt de la pulvérisation du produit de traitement, et une détection des articles en sortie permettant de contrôler une défaillance comme le bourrage de cette machine.

Un signal lumineux multicolore placé au-dessus de la machine, permet de surveiller à distance l'état de marche de cette machine. On notera que l'entretien de la machine est facilité par une conception modulaire, permettant notamment une dépose rapide de la chambre de traitement pour effectuer des opérations de maintenance, ce qui assure un taux d'utilisation élevé.

Pour des problèmes d'implantation de la machine de traitement dans l'atelier, cette machine peut aussi passer les articles à traiter dans l'autre sens avec très peu de modifications, comprenant notamment une simple inversion du sens de rotation des bandes de convoyage 50, et une installation du caisson de séchage 10 de l'autre côté pour le disposer vers la sortie.

## Revendications

1. Machine de traitement d'une surface latérale périphérique d'articles (80), comprenant:
- des moyens d'entraînement (50) pour faire progresser les articles le long d'un trajet de traitement tout en les faisant tourner sur eux-mêmes pendant cette progression ;
- des moyens de traitement (12) positionnés sur au moins un côté du trajet de traitement pour traiter au moins une partie de la surface latérale périphérique des articles à leur passage devant les moyens de traitement;
un moyen (100, 104) générant un film d'air (106) destiné à abriter les moyens d'entraînement (50) et une zone des articles, en particulier un intérieur des articles, du traitement appliqué à la surface latérale des articles, les moyens de traitement et le moyen (100, 104) générant un film d'air (106) agissant d'un même côté du trajet du traitement ; la machine étant **caractérisée en ce que** les moyens d'entraînement comprennent deux convoyeurs (50) à courroies (76) disposés parallèlement de part et d'autre des articles en enserrant les articles entre eux dans une région de préhension des articles qui présente un profil sensiblement circulaire et qui est distincte de la surface latérale périphérique à traiter, les courroies tournant à des vitesses différentes appropriées pour l'avancement et la rotation simultanés des articles.

2. Machine de traitement selon la revendication 1, **caractérisée en ce que** les moyens de traitement (12) sont des buses de pulvérisation, de préférence disposées en quinconce dans un plan latéral par rapport au trajet de traitement.

3. Machine de traitement selon la revendication 1 ou 2, dans laquelle les articles sont en verre, **caractérisée en ce que** les moyens de traitement sont des buses de pulvérisation d'une substance réductrice du coefficient de frottement entre articles en verre, en particulier des bouteilles.

4. Machine de traitement selon l'une des revendications 1 à 3, **caractérisée en ce que** les articles sont des bouteilles ou flacons et **en ce que** la région d'entraînement est un col (82) des bouteilles ou flacons (80) et la surface latérale périphérique s'étend autour du corps des bouteilles ou flacons.

5. Machine de traitement selon l'une des revendications 1 à 4, **caractérisée en ce que** l'écartement latéral entre les deux convoyeurs (50) est réglable.

6. Machine de traitement selon la revendication 5, **caractérisée en ce que** l'écartement latéral est réglable en faisant tourner au moins une vis de positionnement latéral (40) de deux chariots (34) liés chacun à un convoyeur (50), la vis comprenant de chaque côté un pas inversé par rapport à l'autre, chacun des côtés étant engagé dans un écrou fixé à un des chariots.

7. Machine de traitement selon l'une quelconque des revendications 1 à 6, **caractérisée en ce que** les convoyeurs (50) comportent de chaque côté du trajet de traitement deux courroies (76) disposées l'une au-dessus de l'autre, et **en ce que** l'une d'elles est démontable pour les articles dont la région de préhension (82) présente une faible hauteur.

8. Machine de traitement selon l'une des revendications 1 à 7, **caractérisée par** des moyens de calage en hauteur (72) des courroies (76) relativement à leurs poulies de guidage.

9. Machine de traitement selon l'une quelconque des revendications 1 à 8, **caractérisée en ce que** les courroies (78) comprennent dans la largeur une partie présentant une épaisseur réduite pour ne pas être en contact avec les articles.

10. Machine de traitement de surface selon l'une quelconque des revendications 1 à 9, **caractérisée en ce que** les convoyeurs comportent un système de tension rapide des courroies (76, 78), comprenant de préférence une genouillère (114) manoeuvrée par une poignée de commande (116).

11. Machine de traitement selon l'une quelconque des revendications 1 à 10, **caractérisée en ce que** la position en hauteur des moyens d'entraînement (50) est réglable.

12. Machine de traitement selon la revendication 11, **caractérisée en ce que** ladite position en hauteur est réglable par rotation synchronisée de vis verticales (30) engagées dans des écrous (32), assurant le déplacement vertical des moyens d'entraînement (50).

13. Machine de traitement selon la revendication 10 ou 12, **caractérisée en ce qu'**elle comporte sur le dessus un cadre (22) coulissant verticalement qui supporte les moyens d'entraînement (50), ce cadre étant maintenu par des colonnes verticales (24) guidées chacune par une douille de guidage (26).

14. Machine de traitement selon la revendication 13, **caractérisée en ce que** les moyens d'entraînement (50) sont reliés au cadre (22) coulissant verticalement par des mâts creux (52), servant de conduits d'alimentation pour les moyens (100, 104) générant le film d'air (106).

15. Machine de traitement selon l'une quelconque des revendications précédentes, **caractérisée en ce qu'**elle comporte un moyen de réglage de la distance des moyens de traitement (12) par rapport à l'axe du trajet de traitement.

16. Machine de traitement selon l'une quelconque des revendications précédentes, **caractérisée en ce qu'**au moins une dimension de travail des moyens de traitement, choisie parmi la hauteur de traitement, la longueur mesurée parallèlement à la direction du trajet de traitement, la position d'un bord inférieur et/ou d'un bord supérieur de la région de traitement, est réglable.

17. Machine de traitement selon l'une quelconque des revendications précédentes, **caractérisée en ce que** le traitement des articles (80) est fait dans une chambre de traitement (8) sensiblement fermée, qui est soumise à une dépression.

18. Machine de traitement selon la revendication 17, **caractérisée en ce qu'**elle comporte du côté opposé aux moyens de traitement (82) une goulotte d'aspiration (150) débouchant sur une cheminée (144).

19. Machine de traitement selon la revendication 18, **caractérisée en ce qu'**elle comporte devant la goulotte d'aspiration (150) des déflecteurs mobiles (148) ayant une inclinaison réglable.

20. Machine de traitement selon l'une quelconque des revendications 17 à 19, **caractérisée en ce que** le fond de la chambre de traitement (8) présente au moins une inclinaison (152) qui permet de récupérer un produit de traitement dans au moins une goulotte (154).

21. Machine de traitement selon l'une quelconque des revendications précédentes, **caractérisée en ce qu'**elle comporte en sortie de trajet de traitement, un caisson de séchage (10) comprenant des diffuseurs d'air chaud (174) disposés de chaque côté du trajet des articles (80).

22. Machine de traitement selon l'une des revendications 1 à 21, **caractérisée en ce qu'**en sortie de la zone de traitement, en particulier dans le caisson de séchage de la revendication 24, les produits sont relâchés par les moyens d'entraînement (50) sur un convoyeur inférieur sur lequel les produits viennent reposer.

23. Procédé pour traiter la surface latérale périphérique de récipients (80) à col tels que bouteilles ou flacons, tel qu'on prend les récipients par leur col (82) avec des moyens (50) qui font tourner les récipients sur eux-mêmes tout en les faisant avancer le long d'un trajet de traitement, tel qu'on fait agir des moyens de traitement (12) à partir d'au moins un côté du trajet de traitement, tel qu'on fait agir un moyen (100, 104) générant un film d'air (106) destiné à abriter les moyens d'entraînement (50) et/ou une zone des articles, en particulier un intérieur des articles, du traitement appliqué à la surface latérale des articles, le procédé étant **caractérisé en ce que** les moyens de traitement et le moyen (100, 104) générant un film d'air (106) agissent d'un même côté du trajet du traitement.

24. Procédé selon la revendication 23, **caractérisé en ce que** les moyens de traitement sont des moyens de pulvérisation.

25. Procédé selon la revendication 24, **caractérisé en ce que** les moyens de pulvérisation pulvérisent une substance réductrice de coefficient de frottement.

## Patentansprüche

1. Maschine zum Behandeln einer Umfangsseitenfläche von Artikeln (80), enthaltend:
- Antriebseinrichtungen (50) zum Fortbewegen der Artikel entlang einer Behandlungsstrecke, während sie bei dieser Fortbewegung um sich selbst gedreht werden;
- Behandlungseinrichtungen (12), die auf mindestens einer Seite der Behandlungsstrecke angeordnet sind, um zumindest einen Teil der Umfangsseitenfläche der Artikel beim Vorbeibewegen an den Behandlungseinrichtungen zu behandeln;
- eine Einrichtung (100, 104), die einen Luftfilm (106) erzeugt, der dazu bestimmt ist, die Antriebseinrichtungen (50) und einen Bereich der Artikel, insbesondere den Innenraum der Artikel, vor der auf die Seitenfläche der Artikel angewandten Behandlung zu bewahren, wobei die Antriebseinrichtungen und die einen Luftfilm (106) erzeugende Einrichtung (100, 104) auf einer gleichen Seite der Behandlungsstrecke wirken;
wobei die Maschine **dadurch gekennzeichnet ist, dass**
die Antriebseinrichtungen zwei Riemenförderer (50) mit Förderriemen (76) umfassen, die auf beiden Seiten der Artikel parallel angeordnet sind, indem sie die Artikel in einem Greifbereich der Artikel zwischen sich einschließen, der ein im Wesentlichen kreisförmiges Profil aufweist und der separat von der zu behandelnden Umfangsseitenfläche vorliegt, wobei die Förderriemen mit unterschiedlichen Geschwindigkeiten umlaufen, die zum gleichzeitigen Vorschieben und Drehen der Artikel geeignet sind.

2. Behandlungsmaschine nach Anspruch 1, **dadurch gekennzeichnet, dass** die Behandlungseinrichtungen (12) Sprühdüsen sind, die vorzugsweise auf Lücke in einer zur Behandlungsstrecke lateralen Ebene angeordnet sind.

3. Behandlungsmaschine nach Anspruch 1 oder 2, wobei die Artikel aus Glas bestehen, **dadurch gekennzeichnet, dass** die Behandlungseinrichtungen Sprühdüsen zum Versprühen einer den Reibungskoeffizienten verringernden Substanz zwischen Artikeln aus Glas, insbesondere Flaschen, sind.

4. Behandlungsmaschine nach einem der Ansprüche 1 bis 3, **dadurch gekennzeichnet, dass** die Artikel Flaschen oder Fläschchen sind und dass der Antriebsbereich ein Hals (82) der Flaschen bzw. Fläschchen (80) ist und die Umfangsseitenfläche sich um den Körper der Flaschen bzw. Fläschchen erstreckt.

5. Behandlungsmaschine nach einem der Ansprüche 1 bis 4, **dadurch gekennzeichnet, dass** der seitliche Abstand zwischen den beiden Förderern (50) einstellbar ist.

6. Behandlungsmaschine nach Anspruch 5, **dadurch gekennzeichnet, dass** der seitliche Abstand einstellbar ist, indem an zumindest einer Seitenstellschraube (40) von zwei Schlitten (34) gedreht wird, die jeweils mit einem Förderer (50) verbunden sind, wobei die Schraube auf jeder Schraubenseite ein umgekehrtes Gewinde bezüglich der anderen aufweist, wobei jede Schraubenseite in eine an einem der Schlitten befestigte Mutter eingreift.

7. Behandlungsmaschine nach einem der Ansprüche 1 bis 6, **dadurch gekennzeichnet, dass** die Förderer (50) auf jeder Seite der Behandlungsstrecke zwei Riemen (76) enthalten, die übereinander angeordnet sind, und dass eines davon für diejenigen Artikel abmontiert ist, deren Greifbereich (82) eine geringe Höhe aufweist.

8. Behandlungsmaschine nach einem der Ansprüche 1 bis 7, **gekennzeichnet durch** Einrichtungen (72) zum Einstellen der Höhe der Riemen (76) relativ zu ihren Führungsrollen.

9. Behandlungsmaschine nach einem der Ansprüche 1 bis 8, **dadurch gekennzeichnet, dass** die Riemen (78) in der Breite einen Abschnitt enthalten, der eine verringerte Dicke aufweist, um nicht mit den Artikeln in Kontakt zu gelangen.

10. Behandlungsmaschine nach einem der Ansprüche 1 bis 9, **dadurch gekennzeichnet, dass** die Förderer ein Schnellspannsystem für die Riemen (76, 78) enthalten, das vorzugsweise ein über einen Steuergriff (116) betätigbares Kniegelenk (114) aufweist.

11. Behandlungsmaschine nach einem der Ansprüche 1 bis 10, **dadurch gekennzeichnet, dass** die Höhenposition der Antriebseinrichtungen (50) einstellbar ist.

12. Behandlungsmaschine nach Anspruch 11, **dadurch gekennzeichnet, dass** die Höhenposition durch synchronisiertes Drehen von vertikal verlaufenden Schrauben (30) einstellbar ist, die in Muttern (32) eingreifen, wodurch die vertikale Verlagerung der Antriebseinrichtungen (50) sichergestellt wird.

13. Behandlungsmaschine nach Anspruch 10 oder 12, **dadurch gekennzeichnet, dass** sie auf der Oberseite einen vertikal gleitbeweglichen Rahmen (22) enthält, der die Antriebseinrichtungen (50) abstützt, wobei dieser Rahmen über vertikal verlaufende Säulen (24) gehalten wird, die jeweils über eine Führungshülse (26) geführt werden.

14. Behandlungsmaschine nach Anspruch 13, **dadurch gekennzeichnet, dass** die Antriebseinrichtungen (50) mit dem vertikal gleitbeweglichen Rahmen (22) über Hohlstützen (52) verbunden sind, die als Versorgungsleitungen für die den Luftfilm (106) erzeugenden Einrichtungen (100, 104) dienen.

15. Behandlungsmaschine nach einem der vorangehenden Ansprüche, **dadurch gekennzeichnet, dass** sie eine Einrichtung zum Einstellen des Abstands der Behandlungseinrichtungen (12) bezüglich der Achse der Behandlungsstrecke enthält.

16. Behandlungsmaschine nach einem der vorangehenden Ansprüche, **dadurch gekennzeichnet, dass** zumindest eine Arbeitsabmessung der Behandlungseinrichtungen, die ausgewählt aus der Behandlungshöhe, der parallel zur Richtung der Behandlungsstrecke gemessenen Länge, der Position eines unteren Randes und/oder eines oberen Randes des Behandlungsbereichs, einstellbar ist.

17. Behandlungsmaschine nach einem der vorangehenden Ansprüche, **dadurch gekennzeichnet, dass** die Behandlung der Artikel (80) in einer im Wesentlichen geschlossenen Behandlungskammer (8) erfolgt, an die ein Unterdruck angelegt wird.

18. Behandlungsmaschine nach Anspruch 17, **dadurch gekennzeichnet, dass** sie auf der den Behandlungseinrichtungen (82) entgegengesetzten Seite eine Saugrinne (150) enthält, die in einen Schacht (144) mündet.

19. Behandlungsmaschine nach Anspruch 18, **dadurch gekennzeichnet, dass** sie vor der Saugrinne (150) bewegliche Abweiser (148) enthält, die eine einstellbare Neigung haben.

20. Behandlungsmaschine nach einem der Ansprüche 17 bis 19, **dadurch gekennzeichnet, dass** der Boden der Behandlungskammer (8) zumindest eine Neigung (152) aufweist, mit der ein Behandlungsmittel in zumindest einer Rinne (154) zurückgewonnen werden kann.

21. Behandlungsmaschine nach einem der vorangehenden Ansprüche, **dadurch gekennzeichnet, dass** sie am Austritt der Behandlungsstrecke einen Trocknungskasten (10) enthält, der Heißluftdiffusoren (174) aufweist, die auf jeder Seite der Strecke der Artikel (80) angeordnet sind.

22. Behandlungsmaschine nach einem der Ansprüche 1 bis 21, **dadurch gekennzeichnet, dass** am Austritt des Behandlungsbereichs, insbesondere in dem Trocknungskasten nach Anspruch 24, die Produkte von den Antriebseinrichtungen (50) auf einen unteren Förderer abgelassen werden, auf welchem die Produkte zum Aufliegen kommen.

23. Verfahren zum Behandeln der Umfangsseitenfläche von Behältern (80) mit Hals, wie etwa Flaschen oder Fläschchen, derart, dass die Behälter an ihrem Hals (82) mit Einrichtungen (50) ergriffen werden, welche die Behälter um sich selbst drehen und dabei entlang einer Behandlungsstrecke fortbewegen, wobei Behandlungseinrichtungen (12) ausgehend von zumindest einer Seite der Behandlungsstrecke wirken, wobei eine Einrichtung (100, 104) einen Luftfilm (106) erzeugt, der dazu bestimmt ist, die Antriebseinrichtungen (50) und/oder einen Bereich der Artikel, insbesondere den Innenraum der Artikel, vor der auf die Seitenfläche der Artikel angewandten Behandlung zu bewahren,
wobei das Verfahren **dadurch gekennzeichnet ist, dass** die Behandlungseinrichtungen und die einen Luftfilm (106) erzeugende Einrichtung (100, 104) auf einer gleichen Seite der Behandlungsstrecke wirken.

24. Verfahren nach Anspruch 23, **dadurch gekennzeichnet, dass** die Behandlungseinrichtungen Sprüheinrichtungen sind.

25. Verfahren nach Anspruch 24, **dadurch gekennzeichnet, dass** die Sprüheinrichtungen eine den Reibungskoeffizienten verringernde Substanz versprühen.

## Claims

1. Machine for treating a peripheral lateral surface of items (80), comprising:
- drive means (50) for moving the items along a treatment path while rotating them on themselves during this movement;
- treatment means (12) positioned on at least one side of the treatment path in order to treat at least a part of the peripheral lateral surface of the items as they pass in front of the treatment means;
- a means (100, 104) generating an air film (106) intended to protect the drive means (50) and an area of the items, in particular an interior of the items, from the treatment applied to the lateral surface of the items, the treatment means and the means (100, 104) generating an air film (106) operating from one and the same side of the treatment path;
the machine being **characterized in that** the drive means comprise two conveyors (50) with belts (76) arranged in parallel on either side of the items, while gripping the items between them in a gripping region of the items which has a substantially circular profile and which is different from the peripheral lateral surface to be treated, the belts turning at different speeds suitable for the simultaneous feed and rotation of the items.

2. Treatment machine according to claim 1, **characterized in that** the treatment means (12) are spray nozzles, preferably arranged in a quincunx in a lateral plane with respect to the treatment path.

3. Treatment machine according to claim 1 or 2, in which the items are glass items, **characterized in that** the treatment means are nozzles for spraying a substance for reducing the coefficient of friction between glass items, in particular bottles.

4. Treatment machine according to one of claims 1 to 3, **characterized in that** the items are bottles or flacons and **in that** the drive region is a neck (82) of the bottles or flacons (80) and the peripheral lateral surface extends around the body of the bottles or flacons.

5. Treatment machine according to one of claims 1 to 4, **characterized in that** the lateral gap between the two conveyors (50) can be adjusted.

6. Treatment machine according to claim 5, **characterized in that** the lateral spacing can be adjusted by turning at least one lateral positioning screw (40) of two carriages (34) each connected to a conveyor (50), the screw comprising on each side a reverse pitch with respect to the other, each of the sides being engaged in a nut fastened to one of the carriages.

7. Treatment machine according to any one of claims 1 to 6, **characterized in that** the conveyors (50) contain on each side of the treatment path two belts (76) arranged one above the other, and **in that** one of them is removable for items the gripping region (82) of which has a small height.

8. Treatment machine according to one of claims 1 to 7, **characterized by** means for securing the height (72) of the belts (76) relative to their guide pulleys.

9. Treatment machine according to any one of claims 1 to 8, **characterized in that** the belts (78) comprise widthwise a part having a reduced thickness so as to not be in contact with the items.

10. Surface treatment machine according to any one of claims 1 to 9, **characterized in that** the conveyors contain a quick-tensioning system for the belts (76, 78) preferably comprising a toggle lever (114) operated by an operating handle (116).

11. Treatment machine according to any one of claims 1 to 10, **characterized in that** the height position of the drive means (50) can be adjusted.

12. Treatment machine according to claim 11, **characterized in that** said height position can be adjusted by synchronized rotation of vertical screws (30) engaged in nuts (32) ensuring the vertical displacement of the drive means (50).

13. Treatment machine according to claim 10 or 12, **characterized in that** it contains on the top a vertically sliding frame (22) that supports the drive means (50), this frame being held by vertical pillars (24) each guided by a guide bush (26).

14. Treatment machine according to claim 13, **characterized in that** the drive means (50) are connected to the vertically sliding frame (22) by hollow supports (52), serving as supply lines for the means (100, 104) generating the air film (106).

15. Treatment machine according to any one of the preceding claims, **characterized in that** it contains a means for adjusting the distance of the treatment means (12) with respect to the axis of the treatment path.

16. Treatment machine according to any one of the preceding claims, **characterized in that** at least one working dimension of the treatment means, selected from the treatment height, the length measured parallel to the direction of the treatment path, the position of a lower edge and/or an upper edge of the treatment region, can be adjusted.

17. Treatment machine according to any one of the preceding claims, **characterized in that** the treatment of the items (80) is carried out in a substantially closed treatment chamber (8) that placed under negative pressure.

18. Treatment machine according to claim 17, **characterized in that** it contains on the side opposite to the treatment means (82) a suction chute (150) opening onto a chimney (144).

19. Treatment machine according to claim 18, **characterized in that** it contains in front of the suction chute (150) movable deflectors (148) having a pitch that can be adjusted.

20. Treatment machine according to any one of claims 17 to 19, **characterized in that** the bottom of the treatment chamber (8) has at least one slope (152) which makes it possible to recover a treatment product in at least one channel (154).

21. Treatment machine according to any one of the preceding claims, **characterized in that** it contains at the treatment path outlet, a drying enclosure (10) comprising hot air diffusers (174) placed on each side of the path of the items (80).

22. Treatment machine according to one of claims 1 to 21, **characterized in that** at the treatment area outlet, in particular in the drying enclosure of claim 24, the products are released by the drive means (50) onto a lower conveyor on which the products rest.

23. Method for treating the peripheral lateral surface of necked recipients (80) such as bottles or flacons, such that the recipients are held by their neck (82) with means (50) which rotate the recipients on themselves while feeding them along a treatment path, such that treatment means (12) are operated from at least one side of the treatment path, such that a means (100, 104) is operated, generating an air film (106) intended to protect the drive means (50) and/or an area of the items, in particular an interior of the items, from the treatment applied to the lateral surface of the items, the method being **characterized in that** the treatment means and the means (100, 104) generating an air film (106) operate from one and the same side of the treatment path.

24. Method according to claim 23, **characterized in that** the treatment means are spray means.

25. Method according to claim 24, **characterized in that** the spray means spray a substance for reducing the coefficient of friction.
